# EUROPÄISCHE PATENTSCHRIFT

(11) **EP 1 671 384 B1**
(45) Veröffentlichungstag und Bekanntmachung des Hinweises auf die Patenterteilung: **24.10.2007**
(21) Anmeldenummer: 04766542.7
(22) Anmeldetag: 19.08.2004
(51) Int. Cl.: H01M 2/16, B01D 53/22

(54) **KERAMISCHE, FLEXIBLE MEMBRAN MIT VERBESSERTER HAFTUNG DER KERAMIK AUF DEM TRÄGERVLIES**
CERAMIC, FLEXIBLE MEMBRANE PROVIDING IMPROVED ADHESION TO THE SUPPORT FLEECE
MEMBRANE FLEXIBLE CERAMIQUE PRESENTANT UNE MEILLEURE ADHERENCE DE LA CERAMIQUE SUR LE NON-TISSE SUPPORT

(30) Priorität: 14.10.2003 DE 10347569
(43) Veröffentlichungstag der Anmeldung: 21.06.2006
(73) Patentinhaber: Degussa GmbH, 40474 Düsseldorf (DE)
(72) Erfinder: HENNIGE, Volker, 48249 Dülmen (DE); HYING, Christian, 46414 Rhede (DE); HÖRPEL, Gerhard, 48301 Nottuln (DE)
(74) Vertreter: Lang, Arne
(86) Internationale Anmeldenummer: PCT/EP2004/051842
(87) Internationale Veröffentlichungsnummer: WO 2005/038959

(56) Entgegenhaltungen:
- WO-A-03/073534

## Beschreibung

Die vorliegende Erfindung betrifft keramische, flexible Membrane mit verbesserter Haftung der Keramik auf dem Trägervlies, deren Herstellung und deren Verwendung als Separator oder als Filtrationsmembran in Flüssig-Filtrationsanwendungen. Die keramischen Membrane auf Basis von mit Keramik beschichteten Polymertextilien, weisen auch bei starker mechanischer Beanspruchung keine Ablösungen der keramischen Beschichtung auf.

Ein elektrischer Separator ist eine Membran, die in Batterien und anderen Anordnungen, in denen Elektroden, z.B. unter Aufrechterhaltung von Ionenleitfähigkeit, voneinander separiert werden müssen, eingesetzt wird.

Der Separator ist üblicherweise ein dünner, poröser, elektrisch isolierender Stoff mit hoher Ionendurchlässigkeit, guter mechanischer Festigkeit und Langzeitstabilität gegen die im System, z.B. im Elektrolyten der Batterie, verwendeten Chemikalien und Lösemittel. Er soll in Batterien die Kathode von der Anode elektronisch völlig isolieren aber für den Elektrolyten durchlässig sein. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z.B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z.B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen bzw. aus anorganischen Vliesstoffen, wie z.B. Vliesen aus Glas- oder KeramikMaterialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z.B. aus Polypropylen oder aus einem Polypropylen/Polyethylen/Polypropylen-Verbund.

Die heute häufig verwendeten Lithium-Batterien zeichnen sich im Vergleich zu Systemen mit wässrigen Elektrolyten, wie etwa NiCd-Batterien oder Nickel-Metallhydrid-Batterien, durch viele Vorteile, wie z.B. hohe spezifische Energiedichte, keine Selbstentladung und kein Memoryeffekt aus. Lithium-Batterien besitzen aber den Nachteil, dass sie einen brennbaren Elektrolyten enthalten, der zudem sehr heftig mit Wasser reagieren kann. Für Hochenergiebatterien, d.h. Batterien die viel Aktivmaterial enthalten, ist es deshalb sehr wichtig, dass im Falle eines Unfalls und einer damit einhergehenden Erwärmung der Zelle der Stromkreis in der Batterie unterbrochen wird. Dies erfolgt üblicherweise durch spezielle Separatoren, die aus einem Verbund aus Polypropylen(PP)-Polyethylen(PE)-PP bestehen. Ab einer bestimmten Temperatur, der Abschalttemperatur (shut down Temperatur), schmilzt das PE auf und die Poren des Separators werden verschlossen und der Stromkreis wird unterbrochen.

Nachteilig an diesen Separatoren ist die begrenzte thermische Stabilität, denn bei einer weiteren Erwärmung der Zelle schmilzt auch das Polypropylen, so dass es bei dieser Durchbrenntemperatur (melt down Temperatur) zu einem Aufschmelzen des gesamten Separators und somit zu einem großflächigen inneren Kurzschluss kömmt, der häufig unter Feuerschein oder sogar Explosion zur Zerstörung der Batteriezelle führt. Nun sind zwar keramische Separatoren, wie z.B. Keramikpapiere oder Keramikvliese oder -gewebe bekannt, die den Effekt des Durchbrennens (melt down) nicht zeigen, diese zeigen leider aber auch keinen Abschalt(shut down)-Effekt, der insbesondere für Hochenergieanwendungen aber unverzichtbar ist und von Batterieherstellern gefordert wird.

Keramische oder halbkeramische (hybride) Separatoren oder als Separatoren einsetzbare keramische Membranen sind hinlänglich, z.B. aus WO 99/15262 bekannt. Aus dieser Schrift kann auch die Herstellung von Separatoren oder Membranen, die als Separatoren geeignet sind, entnommen werden. Vorzugsweise werden als poröse Träger für die erfindungsgemäßen Separatoren allerdings keine elektrisch leitfähigen Träger wie z.B. Metallgewebe eingesetzt, da es bei der Verwendung solcher Träger zu inneren Kurzschlüssen kommen kann, wenn die keramische Beschichtung des Trägers nicht vollständig ist. Erfindungsgemäße Separatoren weisen deshalb bevorzugt Träger aus nicht elektrisch leitfähigen Materialien auf.

In neuster Zeit sind hybride Separatoren entwickelt worden, die Keramiken und Polymere aufweisen. In DE 102 08 277 wurden Separatoren basierend auf polymeren Substratmaterialien, wie z.B. Polymervliesen, hergestellt, die eine poröse, elektrisch isolierende, keramische Beschichtung aufweisen. Bei mechanischer Beanspruchung, wie sie z.B. bei der Herstellung von Batterien häufig vorkommt, löst sich bei diesen Separatoren trotz ihrer Flexibilität häufig die keramische Beschichtung teilweise ab. Aus diesen Separatoren hergestellte Batterien zeigen deshalb eine relativ hohe Fehlerquote.

Es war deshalb Aufgabe der vorliegenden Erfindung Membranen die als Separatoren geeignet sind bereitzustellen, die bei mechanischer Beanspruchung, wie sie z.B. bei der Weiterverarbeitung von Membranen vorkommt, kein Ablösen der keramischen Beschichtung zeigen.

Überraschenderweise wurde gefunden, dass durch die Verwendung einer Kombination von zumindest zwei unterschiedlichen Haftvermittlern auf Basis von Alkyltrialkoxysilanen, wobei die Alkylgruppe des einen Haftvermittlers einen Substituenten aufweist, der mit einem Substituenten der Alkylgruppe des anderen Haftvermittlers durch Reaktion eine kovalente Bindung bilden kann, bei der Herstellung der keramischen Beschichtung eine Beschichtung erhalten wird, die sich durch eine deutlich bessere Haftung auszeichnet. Überraschenderweise sind die so hergestellten keramischen Beschichtungen zudem sehr stabil gegenüber der Einwirkung von Wasser, weshalb die so hergestellten Membrane nicht nur als Separator sondern auch als Filtrationsmembran in Flüssigfiltrationsanwendungen eingesetzt werden kann.

Gegenstand der vorliegenden Erfindung ist deshalb eine Membran auf Basis eines Polymervlieses, wobei das Vlies auf und in dem Vlies eine keramische Beschichtung aufweist, die zumindest ein Oxid, ausgewählt aus Al₂O₃, TiO₂, ZrO₂ oder SiO₂ aufweist, welche dadurch gekennzeichnet ist, dass in dieser einen Beschichtung zumindest zwei Fraktionen von Oxiden ausgewählt aus Al₂O₃, ZrO₂, TiO₂ und/oder SiO₂ vorhanden sind, wobei die erste keramische Fraktion aus einem Sol erhalten wurde und die zweite Fraktion Partikel mit einer mittleren Partikelgröße von 200 nm bis 5 µm aufweist, und die erste Fraktion als Schicht auf den Partikeln der zweiten Fraktion vorhanden ist und die erste Fraktion mit einem Anteil an der Beschichtung von 1 bis 30 Massenteilen, die zweite Fraktion mit einem Anteil an der Beschichtung von 5 bis 94 Massenteilen in der keramischen Beschichtung vorhanden ist und außerdem ein Silizium aufweisendes Netzwerk vorhanden ist, wobei das Silizium des Netzwerks über Sauerstoffatome an die Oxide der keramischen Beschichtung, über organische Reste an das Polymervlies und über zumindest eine, Kohlenstoffatome aufweisende Kette an ein weiteres Silizium gebunden ist.

Ebenfalls Gegenstand der vorliegenden Erfindung ist ein Verfahren zur Herstellung einer Membran, insbesondere einer erfindungsgemäßen Membran, bei dem ein Polymervlies in und auf dem Vlies mit einer keramischen Beschichtung versehen wird, wofür auf und in das Polymervlies eine Suspension aufgebracht wird und diese durch zumindest einmaliges Erwärmen auf und im Vlies verfestigt wird, wobei die Suspension ein Sol und zumindest eine Fraktion von Oxidpartikeln ausgewählt aus den Oxiden der Elemente Al, Zr, Ti und/oder Si aufweist, welches dadurch gekennzeichnet ist, dass der Suspension vor dem Aufbringen ein Gemisch aus zumindest zwei unterschiedliche Haftvermittler, die jeweils auf einem Alkylalkoxysilan der allgemeinen Formel I

Rₓ-Si(OR)₄₋ₓ (I)

mit x = 1 oder 2 und R = organischer Rest, wobei die Reste R gleich oder unterschiedlich sein können,
basieren, wobei die Haftvermittler so gewählt werden, dass beide Haftvermittler Alkylreste aufweisen, die zumindest jeweils eine reaktive Gruppe als Substituenten aufweist, wobei die reaktive Gruppe am Alkylrest des einen Haftvermittlers mit der reaktiven Gruppe des anderen Haftvermittlers während des zumindest einmaligen Erwärmens unter Ausbildung einer kovalenten Bindung reagiert, oder ein oder mehrere Haftvermittler gemäß der Formel I, die reaktive Gruppen aufweisen, die unter Einwirkung von UV-Strahlung unter Ausbildung einer kovalenten Bindung reagieren, zugegeben wird, wobei bei Zugabe eines Haftvermittlers der unter Einwirkung von UV-Strahlung reagiert, nach dem Aufbringen der Suspension auf das Polymervlies zumindest eine Behandlung mit UV-Strahlung erfolgt.

Außerdem ist Gegenstand der vorliegenden Erfindung die Verwendung von erfindungsgemäßen Membranen oder Separatoren als Filtrationsmembran oder als elektrischer Separator, wobei die als Separator verwendeten Membranen keine Titanverbindungen aufweisen, sowie die Batterien selbst, die eine solche erfindungsgemäße Membran als Separator aufweisen.

Die erfindungsgemäße Membran hat den Vorteil, dass sie eine in Wasser wesentlich höhere Beständigkeit aufweist als Membranen, die unter Verwendung von nur einem oder mehreren Haftvermittlern hergestellt wurden, bei denen eine Ausbildung von kovalenten Bindungen zwischen den Haftvermittlern nicht erfolgt ist. Durch die höhere Stabilität der Membran gegenüber Wasser kann diese nun nicht mehr nur als Separator eingesetzt werden sondern auch in Flüssig-Filtrationen von Wasser aufweisenden Flüssigkeiten.

Die Herstellung der erfindungsgemäßen Membran unter Verwendung der speziellen Haftvermittler hat auch auf das Verfahren vorteilhafte Auswirkungen. So kann bei dem erfindungsgemäßen Verfahren das Verfestigen der Beschichtung bei relativ niedrigen Temperaturen (Trocknungs- bzw. Verfestigungstemperatur) erfolgen, weshalb es auch möglich ist Membranen mit einer haltbaren keramischen Beschichtung herzustellen, die auf einem Polymersubstrat basieren, die einen Schmelz oder Erweichungspunkt von zumindest 120 bis 150 °C aufweisen, wie z.B. Polyamid, Polypropylen oder Polyethylen.

Durch die ausgezeichnete Wasserstabilität kann die erfindungsgemäße Membran z.B. auch bei Temperaturen von 120 °C unter erhöhtem Druck mit Wasserdampf sterilisiert werden, ohne dass die keramische Beschichtung beschädigt wird. Die erfindungsgemäßen Membranen können zum einen wegen der guten Haftung der Beschichtung an dem Polymervlies und zum anderen wegen der Sterilisierbarkeit auch im Bereich der Filtration von Lebensmitteln eingesetzt werden.

Wird eine Membran hergestellt, die wie in einer speziellen Ausführungsform beschrieben zumindest drei Fraktionen von Metalloxiden aufweist, so weisen solche Membranen zudem den Vorteil auf, dass diese nach dem Verfestigen der keramischen Beschichtung auf dem Vlies durch Knicken, Falten oder Zerknüllen nicht mehr zerstört wird. Die Membran kann also praktisch bis herab zu einem Biegeradius von 0 mm gebogen werden. Damit haben die erfindungsgemäßen Membranen eine dramatisch bessere mechanische Stabilität als die aus dem Stand der Technik bekannten keramischen oder hybriden Membrane. Der Umgang mit dieser Membran bei der Herstellung aber auch bei der Verarbeitung, d.h. der Herstellung z.B. von gewickelten oder gestapelten Batterien, wird dadurch entscheidend verbessert. Mit den erfindungsgemäßen Membranen als Separatoren hergestellte Batterien weisen eine sehr geringe Fehlerrate auf.

Die erfindungsgemäßen Membranen weisen als Separatoren ein Polymervlies mit einer auf und in diesem Vlies befindlichen porösen anorganischen, nicht elektrisch leitfähigen Beschichtung auf, und haben den Vorteil, dass sie hervorragende Sicherheitseigenschaften aufweisen. Zum sogenannten Melt-Down (Durchbrennen) kann es bei dem erfindungsgemäßen Separator nicht kommen, da auch bei höheren Temperaturen die anorganische Schicht einen großflächigen Kurzschluss innerhalb der Batterie verhindert.

Auch bei einem inneren Kurzschluss, der z.B. durch einen Unfall verursacht wurde, ist der erfindungsgemäße Separator sehr sicher. Würde sich z.B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei dem erfindungsgemäßen Separator schmilzt das Polymervlies, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Die Vorteile der erfindungsgemäßen Membran als Separator für den Einsatz in Lithium-Ionen-Batterien lassen sich wie folgt zusammenfassen:
◆ Hohe Porosität
◆ Ideale Porenweite
◆ Geringe Dicke
◆ Geringes Flächengewicht
◆ Sehr gutes Benetzungsverhalten
◆ Hohe Sicherheit, d.h. kein melt-down-Effekt
◆ Sehr gute Knick-/Biegbarkeit, weshalb sie besonders gut in sehr eng gewickelten Lithiumbatterien, insbesondere sogenannten gecrashten Zellen, eingesetzt werden können.

Die erfindungsgemäße Membran und ein Verfahren zu deren Herstellung wird im folgenden beschrieben, ohne dass die Erfindung auf diese Ausführungsarten beschränkt sein soll.

Die erfindungsgemäße Membran auf Basis eines Polymervlieses, wobei das Vlies auf und in dem Vlies zumindest eine keramische Beschichtung aufweist, die zumindest ein Oxid, ausgewählt aus Al₂O₃, TiO₂, ZrO₂ oder SiO₂ aufweist, zeichnet sich dadurch aus, dass in dieser einen Beschichtung zumindest zwei Fraktionen von Oxiden ausgewählt aus Al₂O₃, ZrO₂, TiO₂ und/oder SiO₂ vorhanden sind, wobei die erste keramische Fraktion aus einem Sol erhalten wurde und die zweite Fraktion Partikel mit einer mittleren Partikelgröße von 200 nm bis 5 µm aufweist, und die erste Fraktion als Schicht auf den Partikeln der zweiten Fraktion vorhanden ist und die erste Fraktion mit einem Anteil an der Beschichtung von 1 bis 30 Massenteilen, die zweite Fraktion mit einem Anteil an der Beschichtung von 5 bis 94 Massenteilen in der keramischen Beschichtung vorhanden ist und außerdem ein Silizium aufweisendes Netzwerk vorhanden ist, wobei das Silizium des Netzwerks über Sauerstoffatome an die Oxide der keramischen Beschichtung, über organische Reste an das Polymervlies und über zumindest eine, Kohlenstoffatome aufweisende Kette an ein weiteres Silizium gebunden ist. Die Kohlenstoffatome aufweisende Kette weist vorzugsweise außerdem zumindest ein Stickstoffatom auf. Bevorzugt weist die erfindungsgemäße Membran ein Silizium aufweisendes Netzwerk auf, bei dem die Ketten, mit welchen die Siliziumatome unter einander über Kohlenstoffatome verbunden sind, durch Stickstoff aufweisende Ketten verbundenen Siliziumatome durch Addition einer Aminogruppe an eine Glycidyl-Gruppe erhalten wurde. Durch diese Ketten zwischen den Siliziumatomen liegt neben einem anorganischen Netzwerk, welches über Si- bzw. Metall-Sauerstoffbrücken entsteht, ein zweites mit diesem vernetztes organisches Netzwerk vor, durch das die Stabilität der Membran, insbesondere gegenüber Wasser, signifikant verstärkt wird. Soll die erfindungsgemäße Membran als Separator eingesetzt werden, so weist die Membran keine Titanverbindungen (TiO₂), sondern insbesondere als Partikel oder Sol nur SiO₂, Al₂O₃ und/oder ZrO₂ auf.

Je nach Ausführungsart der erfindungsgemäßen Membran kann diese als erste keramische Fraktion Partikel, insbesondere Partikel mit einer mittleren Partikelgröße von kleiner 20 nm aufweisen. Eine solche keramische Fraktion kann z.B. über ein partikuläres Sol hergestellt worden sein. In einer anderen bevorzugten Ausführungsform der erfindungsgemäßen Membran enthält die keramische Fraktion Partikel oder ein polymerartiges anorganisches Netzwerk, welche über ein polymeres Sol hergestellt wurden. Die keramische Fraktion weist vorzugsweise eine Schichtdicke kleiner 100 nm, bevorzugt kleiner 50 nm auf der Oberfläche der Partikel der zweiten Fraktion auf. Die Zweite Fraktion von Partikeln weist vorzugsweise eine BET-Oberfläche von kleiner 5 m²/g auf.

Bevorzugt weisen die erfindungsgemäßen Membrane Polymervliese auf, die flexibel sind und bevorzugt eine Dicke von weniger als 50 µm sowie ein Flächengewicht von kleiner als 25 g/m² aufweisen. Durch die Flexibilität des Vlieses wird gewährleitstet, dass auch die erfindungsgemäße Membran flexibel sein kann.

Durch die hohe Flexibilität der erfindungsgemäßen Membrane ist es nun auch möglich diese als Separatoren in Wickelzellen einzusetzen, die einen kleinen Wickelradius von kleiner 0,5 mm aufweisen.

Die Dicke des Vlieses hat einen großen Einfluss auf die Eigenschaften der Membran, insbesondere auf die Eigenschaften einer als Separator eingesetzten Membran, da zum einen die Flexibilität aber auch der Flächenwiderstand des mit Elektrolyt getränkten Separators von der Dicke des Vlieses abhängig ist. Bevorzugt weist der erfindungsgemäße Membran deshalb Vliese auf, die eine Dicke von kleiner 30 µm, insbesondere von 10 bis 20 µm aufweisen. Besonders bevorzugt weist die erfindungsgemäße Membran Vliese auf, die ein Flächengewicht von kleiner 20 g/m², insbesondere von 5 bis 15 g/m² aufweisen Um eine ausreichend hohe Leistungsfähigkeit der Batterien, insbesondere bei Lithiumionenbatterien erreichen zu können hat es sich als vorteilhaft erwiesen, wenn der erfindungsgemäße Membran einen Träger aufweist, der vorzugsweise eine Porosität von größer 50 %, bevorzugt von 50 bis 97 %, besonders bevorzugt von 60 bis 90 % und ganz besonders bevorzugt von 70 bis 90% aufweist. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Wichtig für die Verwendung in einer erfindungsgemäßen Membran, insbesondere Separator, kann eine möglichst homogene Porenradienverteilung im Vlies sein. Eine möglichst homogene Porenradienverteilung im Vlies kann in Verbindung mit optimal abgestimmten Oxid-Partikeln bestimmter Größe zu einer optimierten Porosität der erfindungsgemäßen Membran, insbesondere mit Blick auf den Einsatz als Separator führen. Vorzugsweise weist die erfindungsgemäße Membran, insbesondere für als Separator einzusetzende Membrane, deshalb ein Vlies auf, welches eine Porenradienverteilung aufweist, bei der mindestens 50 % der Poren einen Porenradius von 100 bis 500 µm aufweisen.

Als Polymerfasern weist das Vlies vorzugsweise nicht elektrisch leitfähige Fasern von Polymeren auf, die vorzugsweise ausgewählt sind aus Polyacrylnitril (PAN), Polyester, wie z.B. Polyethylenterephthalat (PET), Polyamid (PA), wie z.B. Polyamid 12 oder Polyolefinen, wie z.B. Polypropylen (PP) oder Polyethylen (PE). Besonders bevorzugt weist das Vlies Polymerfasern aus Polyester, insbesondere PET, und/oder Polyamid, insbesondere Polyamid 12, auf bzw. besteht vollständig aus diesen Polymerfasern. Die Polymerfasern der Vliese weisen vorzugsweise einen Durchmesser von 0,1 bis 10 µm, besonders bevorzugt von 1 bis 5 µm auf.

In einer bevorzugten Ausführungsform der erfindungsgemäßen Membran weist diese in der Beschichtung zumindest drei Fraktionen von Oxiden ausgewählt aus Al₂O₃, ZrO₂, TiO₂ und/oder SiO₂ vorhanden sind, wobei die dritte Fraktion Partikel mit einer mittleren Primärpartikelgröße von 10 nm bis 199 nm aufweist und die erste Fraktion als Schicht auf den Partikeln der zweiten und dritten Fraktion vorhanden ist und die erste Fraktion mit einem Anteil an der Beschichtung von 1 bis 30 Massenteilen, die zweite Fraktion mit einem Anteil an der Beschichtung von 30 bis 94 Massenteilen und die dritte Fraktion mit einem Anteil an der Beschichtung von 5 bis 50 Massenteilen in der keramischen Beschichtung vorhanden ist.

Bei dieser bevorzugten Ausführungsform dienen die großen Partikel (Zweite Fraktion) als Füllmaterial für die im Träger vorhandenen großen Maschen. Die erste keramische Fraktion dient als anorganisches Bindemittel, welches die Partikel untereinander sowie an dem Vlies (bzw. an dem durch die Haftvermittler gebildeten anorganischen Silizium aufweisenden Netzwerk) fixiert. Das anorganische Netzwerk stellt eine besonders gute Haftung der keramischen Beschichtung auf dem Polymervlies sicher. Die Partikel der dritten Fraktion, welche eine mittlere Partikelgröße aufweisen, sind vermutlich verantwortlich für die besonders gute Flexibilität.

Besonders bevorzugt weist die erfindungsgemäße Membran eine Beschichtung auf, bei der die dritte Fraktion Partikel mit einer mittleren Primärpartikelgröße von 30 nm bis 60 nm aufweist und die zweite Fraktion Partikel mit einer mittleren Partikelgröße von 1 bis 4 µm aufweist und die erste Fraktion mit einem Anteil an der Beschichtung von 10 bis 20 Massenteilen, die dritte Fraktion mit einem Anteil an der Beschichtung von 10 bis 30 Massenteilen und die zweite Fraktion mit einem Anteil an der Beschichtung von 40 bis 70 Massenteilen in der keramischen Beschichtung vorhanden ist.

Es kann vorteilhaft sein, wenn die dritte Partikelfraktion Partikel enthält, die eine mittlere Aggregat- oder Agglomeratgröße von 1 bis 25 µm aufweisen. Vorzugsweise enthält die dritte (Partikel-)Fraktion Partikel, die eine BET-Oberfläche von 10 bis 1000, bevorzugt von 40 bis 100 m²/g aufweisen.

Eine besonders hohe Flexibilität der erfindungsgemäßen Membran kann erreicht werden, wenn die Partikel der dritten Fraktion Zirkoniumoxid- oder bevorzugt Siliziumoxidpartikel und die Partikel der zweiten Fraktion Aluminiumoxidpartikel sind und die keramische Fraktion aus Siliziumoxid gebildet wird. Die mittleren Partikel (dritte Fraktion, wie z.B. Sipernat, Aerosil oder VP Zirkoniumoxid, alle Degussa AG) und großen Partikel (zweite Fraktion, wie z.B. die Aluminiumoxide CT800SG, AlCoA, und MZS, Martinswerke) sind kommerziell verfügbare Partikel. Die erste keramische Fraktion stammt aus Solen, die ebenfalls kommerziell erhältlich sind oder selbst hergestellt werden müssen.

Die erfindungsgemäßen Membrane lassen sich ohne Beschädigung vorzugsweise bis auf jeden Radius bis herab zu 50 m, vorzugsweise 10 cm und besondere bevorzugt 5 mm biegen, ohne dass dadurch Fehler in der Beschichtung entstehen. Die erfindungsgemäßen Membrane zeichnen sich außerdem dadurch aus, dass sie eine Reißfestigkeit von mindestens 1 N/cm, vorzugsweise von mindestens 3 N/cm und ganz besonders bevorzugt von größer 6 N/cm aufweisen können.

Weisen die erfindungsgemäßen Membrane die oben erwähnten drei Fraktionen in den angegebenen Massenbereichen auf, so können sie eine noch größere Flexibilität aufweisen. Diese erfindungsgemäßen Membrane lassen sich ohne Beschädigung vorzugsweise bis auf jeden Radius bis herab zu 100 m, bevorzugt auf einen Radius von 100 m bis 5 mm, besonders bevorzugt auf einen Radius von 5 bis 0,5 mm, vorzugsweise bis herab zu 0,1 mm und ganz besonders bevorzugt bis herab zu 0,01 mm biegen, ohne dass dadurch Fehler entstehen. Insbesondere lassen sich die erfindungsgemäßen Membrane falten, wie dies z.B. mit Tüchern möglich ist, ohne dass die keramische Beschichtung sich löst. Die hohe Reißfestigkeit und die gute Biegbarkeit der erfindungsgemäßen Membran hat den Vorteil, dass beim Einsatz der Membran als Separator beim Laden und Entladen der Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Zur Verwendung als Separator kann es vorteilhaft sein, wenn die erfindungsgemäße Membrane eine Porosität von 30 bis 80 % aufweist. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen. Unter der mittleren Porengröße und der Porosität ist die mittlere Porengröße und die Porosität zu verstehen, die nach der bekannten Methode der Quccksilber-Porosimetrie z.B. mit einem Porosimeter 4000 von Carlo Erba Instruments bestimmt werden kann. Der Quecksilber-Porosimetrie liegt die Washburn-Gleichung zu Grunde (E. W. Washburn, "Note on a Method of Determining the Distribution of Pore Sizes in a Porous Material", Proc. Natl. Acad. Sci., 7, 115-16 (1921)).

Bei der Verwendung der Membran als Separator kann es zudem vorteilhaft sein, wenn eine Abschaltfunktion vorhanden ist. Zu diesem Zweck können auf der keramischen Schicht Abschaltpartikel bzw. eine Schicht aus Abschaltpartikeln vorhanden sein. Solche Abschaltpartikel können beispielweise natürliche oder künstliche Wachse, (niedrigschmelzende) Polymere, wie z.B. Polyolefine oder Mischungen davon sein, wobei das Material der Abschaltpartikel so ausgewählt wird, das die Partikel bei einer gewünschten Abschalttemperatur aufschmelzen und die Poren des Separators (der Membran) verschließen, so dass ein weiterer Ionenfluss verhindert wird. Besonders bevorzugt weist die erfindungsgemäße Membran für den Einsatz als Separator mit Abschaltfunktion Abschaltpartikel aus Polyethylen (-wachs) auf.

Die Größe der Abschaltpartikel ist prinzipiell beliebig, solange sichergestellt ist, dass die Poren der anorganischen Schicht bei der Herstellung des erfindungsgemäßen Separators (der Membran) nicht verstopft werden. Vorzugsweise weisen die Abschaltpartikel eine mittlere Partikelgröße (D_{w}) auf, die größer als die mittlere Porengröße (dₛ) der Poren der anorganischen Schicht ist. Bevorzugt weisen die Abschaltpartikel eine mittlere Partikelgröße (D_{w}) auf, die größer als der mittlere Porendurchmesser (dₛ) und kleiner 5 d_{s,} besonders bevorzugt kleiner 2 dₛ beträgt. Dies ist insbesondere deshalb vorteilhaft, weil so ein Eindringen und Verschließen der Poren der anorganischen Schicht, das eine Reduktion des Ionenflusses und damit der Leitfähigkeit des Separators und auch der Leistungsfähigkeit der Batterie zur Folge hätte, verhindert wird. Die Dicke der Abschaltpartikelschicht ist nur in sofern kritisch, als das eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von kleiner 2 D_{w} bis größer 1 D_{w} beträgt.

Die erfindungsgemäßen Membranen/Separatoren mit Abschaltfunktion weisen vorzugsweise eine Dicke von kleiner 50 µm, bevorzugt kleiner 40 µm, besonders bevorzugt eine Dicke von 5 bis 35 µm auf. Ohne Abschaltpartikel weist der erfindungsgemäße Separator vorzugsweise eine Dicke von 15 bis 50 µm, vorzugsweise von 20 bis 30 µm auf. Die Dicke des Separators hat einen großen Einfluss auf die Eigenschaften des Separators, da zum einen die Flexibilität aber auch der Flächenwiderstand des mit Elektrolyt getränkten Separators von der Dicke des Separators abhängig ist. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Die erfindungsgemäßen Separatoren sind vorzugsweise erhältlich durch das erfindungsgemäße Verfahren. Das Verfahren zur Herstellung einer Membran, insbesondere einer erfindungsgemäßen Membran, bei dem ein Polymervlies in und auf dem Vlies mit einer keramischen Beschichtung versehen wird, wofür auf und in das Polymervlies eine Suspension aufgebracht wird und diese durch zumindest einmaliges Erwärmen auf und im Vlies verfestigt wird, wobei die Suspension ein Sol und zumindest eine Fraktion von Oxidpartikeln ausgewählt aus den Oxiden der Elemente Al, Zr, Ti und/oder Si aufweist, zeichnet sich dadurch aus, dass der Suspension vor dem Aufbringen ein Gemisch aus zumindest zwei unterschiedliche Haftvermittler, die jeweils auf einem Alkylalkoxysilan der allgemeinen Formel I

Rₓ-Si(OR)₄₋ₓ (I)

mit x = 1 oder 2 und R = organischer Rest, wobei die Reste R gleich oder unterschiedlich sein können,
basieren, wobei die Haftvermittler so gewählt werden, dass beide Haftvermittler Alkylreste aufweisen, die zumindest jeweils eine reaktive Gruppe als Substituenten aufweist, wobei die reaktive Gruppe am Alkylrest des einen Haftvermittlers mit der reaktiven Gruppe des anderen Haftvermittlers während des zumindest einmaligen Erwärmens unter Ausbildung einer kovalenten Bindung reagiert, oder ein oder mehrere Haftvermittler gemäß der Formel I, die reaktive Gruppen aufweisen, die unter Einwirkung von UV-Strahlung unter Ausbildung einer kovalenten Bindung reagieren, zugegeben wird, wobei bei Zugabe eines Haftvermittlers der unter Einwirkung von UV-Strahlung reagiert, nach dem Aufbringen der Suspension auf das Polymervlies zumindest eine Behandlung mit UV-Strahlung erfolgt. Die Behandlung mit UV-Strahlung kann z.B. durch eine UV-Lampe erfolgen, wobei die eingestrahlte Energiemenge so groß gewählt sein muss, dass eine Vernetzung der Haftvermittler stattfindet. Eine entsprechende Behandlung kann z.B. durch Bestrahlung mit einer Quecksilberdampflampe mit einer Wellenlänge von 254 nm für 0,1 bis 24 Stunden, bevorzugt 1 bis 4 Stunden erfolgen. Die Behandlung mit UV-Strahlung kann vor oder nach dem zumindest einmaligen Erwärmen erfolgen. Vorzugsweise erfolgt die UV-Behandlung nach dem Aufbringen der Suspension auf das Polymervlies und vor dem einmaligen Erwärmen der Suspension zur Verfestigung derselben. Besonders bevorzugt erfolgt die Behandlung mit UV-Strahlung nach einem ersten Erwärmen der auf das Polymervlies aufgebrachten Suspension, welches der Antrocknung (Vortrocknung) der Suspension dient und vor einem zweiten Erwärmen, mit welchem die Suspension verfestigt wird Das Vortrocknen kann z.B. bei einer Temperatur von 50 bis 90 °C, vorzugsweise von 60 bis 85 °C, vorzugsweise für eine Dauer von 0,1 bis 3 Stunden, bevorzugt für eine Dauer von 0,5 bis 1,5 Stunden, erfolgen.

Durch die Verwendung von zumindest zwei der besagten Haftvermittler entsteht vermutlich während der Herstellung der Membran ein Silizium aufweisendes Netzwerk, wobei das Silizium des Netzwerks über Sauerstoffatome an die Oxide der keramischen Beschichtung, über organische Reste an das Polymervlies und über zumindest eine, Kohlenstoffatome aufweisende Kette an ein weiteres Silizium gebunden ist. Vermutlich der gleiche Effekt wird durch eine zumindest einmalige Behandlung mit UV-Strahlung erzielt, wenn ein UV-aktiver Haftvermittler des Suspension zugegeben wird. Durch die Ketten zwischen den Siliziumatomen liegt neben einem anorganischen Netzwerk, welches über Si- bzw. Metall-Sauerstoffbrücken entsteht, ein zweites mit diesem vernetztes organisches Netzwerk vor, durch das die Stabilität der Membran, insbesondere gegenüber Wasser, signifikant verstärkt wird.

Als Haftvermittler sind prinzipiell alle Haftvermittler einsetzbar, die der oben genannten Formel I genügen und bei denen zumindest zwei Haftvermittler jeweils einen Alkylrest aufweisen, der in der Lage ist in einer chemischen Reaktion mit dem Alkylrest des anderen Haftvermittlers eine kovalente Bindung aufzubauen. Grundsätzlich kommen alle chemischen Reaktionen in Frage, vorzugsweise ist die chemische Reaktion aber eine Additions- oder Kondensationsreaktion. Die Haftvermittler können dabei jeweils zwei oder einen Alkylrest aufweisen (x in Formel I gleich 1 oder 2). Bevorzugt weisen die im erfindungsgemäßen Verfahren eingesetzten Haftvermittler mit einer reaktiven Gruppe am Alkylrest nur einen Alkylrest auf (x = 1). Im erfindungsgemäßen Verfahren können als zumindest zwei Haftvermittler z.B. ein eine Aminogruppe am Alkylrest und ein eine Glycidyl-Gruppe am Alkylrest aufweisende Haftvermittler eingesetzten werden. Besonders bevorzugt werden im erfindungsgemäßen Verfahren als Haftvermittler 3-Aminopropyltriethoxysilan (AMEO) und 3-Glycidyloxytrimethoxysilan (GLYMO) eingesetzt. Vorzugsweise beträgt das molare Verhältnis der beiden Haftvermittler zueinander von 100 zu 1 bis 1 zu 100, bevorzugt von 2 zu 1 bis 1 zu 2 und ganz besonders bevorzugt ca. 1 zu 1. Als UV-aktiver Haftvermittler, der unter Einwirkung von UV-Strahlung eine kovalente Bindung zwischen den Haftvermittlermolekülen ausbildet, wird vorzugsweise Methacryloxypropyltrimethoxysilan (MEMO) eingesetzt. Die Haftvermittler sind z.B. bei der Degussa AG zu beziehen.

Um ein ausreichend stabiles Netzwerk zu erhalten, weist die erfindungsgemäße Suspension vorzugsweise einen Anteil von 0,1 bis 20 Massen-%, bevorzugt von 2 bis 10 Massen-% an Haftvermittlern auf. Neben den genannten "reaktiven" Haftvermittlern kann die Suspension noch weitere Haftvermittler, ausgewählt aus den organofunktionellen Silanen, aufweisen. Diese Haftvermittler können in der Suspension ebenfalls mit einem Anteil von 0,1 bis 20 Massen-%, bevorzugt von 2 bis 10 Massen-% vorliegen.

Soll die mit dem erfindungsgemäßen Verfahren hergestellte Membran als Separator eingesetzt werden, so werden keine elektrisch leitenden Verbindungen, insbesondere keine Titanverbindungen bei der Herstellung der Membran eingesetzt.

Die Suspension kann im erfindungsgemäßen Verfahren z.B. durch Aufdrucken, Aufpressen, Einpressen Aufrollen, Aufrakeln, Aufstreichen, Tauchen, Spritzen oder Aufgießen auf und in das Vlies gebracht werden.

Das eingesetzte Vlies weist vorzugsweise eine Dicke von kleiner 30 µm, bevorzugt kleiner 20 µm und besonders bevorzugt eine Dicke von 10 bis 20 µm auf. Besonders bevorzugt werden solche Vliese eingesetzt, wie sie bei der Beschreibung der erfindungsgemäßen Membran beschrieben wurden. Es kann vorteilhaft sein, wenn die Polymerfasern einen Durchmesser von 0,1 bis 10 µm, vorzugsweise von 1 bis 5 µm aufweisen. Besonders bevorzugt wird ein Polymervlies eingesetzt, das Fasern ausgewählt aus Polyacrylnitril, Polyester, Polyimid, Polyamid, Polytetrafluorethylen und/oder Polyolefin, wie z.B. Polyethylen oder Polypropylen, aufweist. Insbesondere wird ein Polymervlies eingesetzt, das Fasern ausgewählt aus Polyester, insbesondere Polyethylenterephthalat, und/oder Polyamid, insbesondere Polyamid 12, aufweist.

Die zur Herstellung der Beschichtung verwendete Suspension weist zumindest die oben genannte Fraktion zumindest eines Oxids des Aluminiums, Siliziums, Titans und/oder Zirkoniums und zumindest ein Sol, der Elemente Al, Zr, Ti und/oder Si auf, und wird durch Suspendieren zumindest der Partikel der zweiten Fraktion in zumindest einem dieser Sole hergestellt. Die Suspension kann partikuläre oder polymere Sole aufweisen. Vorzugsweise weist die Suspension ein polymeres Sol, insbesondere ein polymeres Sol einer Siliziumverbindung auf.

Die Sole werden durch Hydrolisieren zumindest einer Vorläuferverbindung der Elemente Zr, Al, Ti und/oder Si mit Wasser oder einer Säure oder einer Kombination dieser Verbindungen erhalten. Ebenso kann es vorteilhaft sein, die zu hydrolisierende Verbindung vor der Hydrolyse in Alkohol oder eine Säure oder eine Kombination dieser Flüssigkeiten zu geben. Vorzugsweise liegen die zu hydrolisierenden Verbindungen gelöst in einem wasserfreien Lösemittel, bevorzugt Alkohol, vor und werden mit dem 0,1 bis 100-fachen, bevorzugt 1 bis 5-fachen Molverhältnis an Wasser hydrolysiert.

Als zu hydrolisierende Verbindung wird vorzugsweise zumindest ein Nitrat, ein Halogenid (Chlorid), ein Carbonat oder eine Alkoholatverbindung der Elemente Zr, Al und/oder Si, vorzugsweise Si hydrolisiert. Besonders bevorzugt als zu hydrolysierende Verbindungen sind Alkoxysilane, insbesondere Tetraethoxysilan (TEOS). Die Hydrolyse erfolgt vorzugsweise in Gegenwart von Wasser, Wasserdampf, Eis, oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60 %-igen organischen oder anorganischen Säure, besonders bevorzugt mit einer Mineralsäure, ausgewählt aus Schwefelsäwe, Salzsäure, Perchlorsäure, Phosphorsäure und Salpetersäure oder einer Mischung dieser Säuren behandelt werden.

In einer weiteren Ausführungsvariante des erfindungsgemäßen Verfahrens werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen, wird die Hydrolyse vorzugsweise so durchgeführt, dass die zu hydrolisierende Verbindung mit dem 0,5 bis 10-fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10-fache Menge an Wasser kann bei sehr langsam hydrolisierenden Verbindungen, wie z.B. beim Tetraethoxysilan, eingesetzt werden. Eine Hydrolyse mit weniger als der bevorzugten Menge an Wasser, Wasserdampf oder Eis führt ebenfalls zu guten Ergebnissen. Wobei ein Unterschreiten der bevorzugten Menge von einem halben Molverhältnis um mehr als 50% möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol ist es vorteilhaft, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension oder auch als Haftvermittler in einem Vorbehandlungsschritt eingesetzt werden.

Sowohl die partikulären Sole als auch die polymeren Sole können als Sol in dem Verfahren zur Herstellung der Suspension eingesetzt werden. Neben den Solen, die wie gerade beschrieben erhältlich sind, können prinzipiell auch handelsübliche Sole, wie z.B. Silicasole (wie etwa Levasil, Bayer AG), eingesetzt werden. Das Verfahren der Herstellung von bevorzugt im erfindungsgemäßen Verfahren einsetzbaren Membranen durch Aufbringen und Verfestigen einer Suspension auf einen Träger an und für sich ist aus DE 10142622 und in ähnlicher Form aus WO 99/15262 bekannt, jedoch lassen sich nicht alle Parameter bzw. Einsatzstoffe, auf die Herstellung der im erfindungsgemäßen Verfahren hergestellten Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membrane bzw. Separatoren erhalten werden, die Fehler (wie z.B. Löcher oder Risse) aufweisen und damit unbrauchbar sind.

Es wurde gefunden, dass ein Solsystem bzw. eine Suspension, welches bzw. welche im Benetzungsverhalten den Polymeren angepasst wurde, die Trägermaterialien, insbesondere die Vliesmaterialien vollständig durchtränkt und somit fehlerfreie Beschichtungen erhältlich sind. Bevorzugt erfolgt bei dem Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z.B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Benetzungsverhalten an das verwendete Vlies anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Solche guten Haftfestigkeiten sind mit partikulären Solsystemen normalerweise nicht erhältlich. Vorzugsweise werden deshalb die erfindungsgemäße eingesetzten Vliese, die Polymerfasern aufweisen, mittels Suspensionen beschichtet, die auf polymeren Solen basieren.

Besonders bevorzugt werden Suspensionen eingesetzt, bei denen der Massenanteil der suspendierten Komponente das 1,5 bis 150-fache, besonders bevorzugt das 5 bis 20-fache der eingesetzten Fraktion aus dem Sol beträgt. Als suspendierte Komponente können insbesondere Aluminiumoxid-Partikel eingesetzt werden, die beispielweise von der Firma Martinswerke unter den Bezeichnungen *MZS 3 und MZS1* und von der Firma AlCoA unter der Bezeichnung CT3000 SG, CL3000 SG, CT1200 SG, CT800SG und HVA SG angeboten werden.

In einer bevorzugten Ausführungsvariante des erfindungsgemäßen Verfahren wird eine Suspension eingesetzt, die ein Sol und zumindest zwei Fraktionen von Oxidpartikeln ausgewählt aus den Oxiden der Elemente Al, Zr, Ti und/oder Si aufweist und zumindest eine erste Fraktion Primärpartikel mit einer mittleren Partikelgröße von 200 nm bis 5 µm und einem Anteil an der Suspension von 30 bis 94 Massenteilen und zumindest eine zweite Fraktion eine mittlere Primärpartikelgröße von 10 nm bis 199 nm und einem Anteil an der Suspension von 5 bis 50 Massenteilen aufweist. Die Partikel der ersten Fraktion sind vorzugsweise Aluminiumoxid-Partikel und werden beispielweise von der Firma Martinswerke unter den Bezeichnungen *MZS 3 und MZS1* und von der Firma AlCoA unter der Bezeichnung CT3000 SG, CL3000 SG, CT1200 SG, CT800SG und HVA SG angeboten. Aluminiumoxid-, Siliziumoxid- oder Zirkoniumoxid-Partikel der zweiten Fraktion werden beispielweise von der Degussa AG unter den Bezeichnungen Sipernat, Aerosil, Aerosil P25 oder Zirkoniumoxid VP angeboten.

Es hat sich herausgestellt, dass der Einsatz von handelsüblichen Oxidpartikeln unter Umständen zu unbefriedigenden Ergebnissen führt, da häufig eine sehr breite Korngrößenverteilung vorliegt. Es werden deshalb bevorzugt Metalloxidpartikel eingesetzt, die durch ein herkömmliches Verfahren, wie z.B. Windsichten und Hydroklassieren klassiert wurden.

Zur Verbesserung der Haftung der anorganischen Komponenten an Polymerfasern bzw. - vliesen, aber auch zur Verbesserung der Haftung der später aufzubringenden Abschaltpartikel, kann es vorteilhaft sein, den eingesetzten Suspensionen weitere Haftvermittler, wie z.B. organofunktionelle Silane, wie z.B. die Degussa-Silane AMEO (3-Aminopropyltriethoxysilan), GLYMO (3-Glycidyloxytrimethoxysilan), MEMO (3-methacryloxypropyltrimethoxysilan), Silfin (Vinylsilan + Initiator + Katalysator), VTEO (Vinyltriethoxysilan), beizufügen. Das Beifügen von Haftvermittlern ist dabei bei Suspensionen auf Basis polymerer Sole bevorzugt. Als Haftvermittler sind allgemein gesprochen insbesondere Verbindungen, ausgewählt aus den Octylsilanen, den Vinylsilanen, den aminfunktionalisierten Silanen und/oder den Glycidylfunktionalisierten Silanen einsetzbar. Besonders bevorzugte Haftvermittler für Polyamide sind Aminfunktionelle Silane und für Polyester Glycidyl-funktionalisierte Silane. Auch andere Haftvermittler sind einsetzbar, die aber auf die jeweiligen Polymere abgestimmt sein müssen. Die Haftvermittler müssen dabei so ausgewählt werden, dass die Verfestigungstemperatur unterhalb des Schmelz- oder Erweichungspunktes des als Substrat eingesetzten Polymeren und unterhalb dessen Zersetzungstemperatur liegt. Bevorzugt weisen erfindungsgemäße Suspensionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die durch das Aufbringen auf und im Polymervlies vorhandene Suspension kann z.B. durch Erwärmen auf 50 bis 350 °C verfestigt werden. Da bei der Verwendung polymerer Materialien die maximal zulässige Temperatur durch die Erweichungs-/Schmelztemperatur dieses Materials vorgegeben wird, ist diese entsprechend anzupassen. So wird je nach Ausführungsvariante des Verfahrens die auf und im Vlies vorhandene Suspension durch Erwärmen auf 100 bis 350 °C und ganz besonders bevorzugt durch Erwärmen auf 200 bis 280 °C verfestigt. Es kann vorteilhaft sein, wenn das Erwärmen für 1 Sekunde bis 60 Minuten bei einer Temperatur von 150 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 170 bis 220 °C und vorzugsweise für 0,5 bis 10 min. Das Verfestigen durch Erwärmen der Suspension auf einem Polymervlies mit Fasern aus Polyester, insbesondere PET, erfolgt vorzugsweise für 0,5 bis 10 Minuten bei einer Temperatur von 200 bis 220 °C, auf einem Polymervlies mit Fasern aus Polyamid, insbesondere Polyamid 12 für 0,5 bis 10 Minuten bei einer Temperatur von 130 bis 180 °C und auf einem Polymervlies mit Fasern aus Polyethylen für 0,5 bis 10 Minuten bei einer Temperatur von 100 bis 140 °C erfolgt. Das Erwärmen des Verbundes kann mittels erwärmter Luft, Heißluft, Infrarotstrahlung oder durch andere Erwärmungsmethoden nach dem Stand der Technik erfolgen.

Das Verfahren zur Herstellung der erfindungsgemäßen Membranen kann z.B. so durchgeführt werden, dass das Vlies von einer Rolle abgerollt wird, mit einer Geschwindigkeit von 1 m/h bis 2 m/s, vorzugsweise mit einer Geschwindigkeit von 0,5 m/min, bis 20 m/min und ganz besonders bevorzugt mit einer Geschwindigkeit von 1 m/min bis 5 m/min durch zumindest eine Apparatur, welche die Suspension auf und in das Vlies bringt, wie z.B. eine Walze, eine Spritze oder eine Rakel, und zumindest eine weitere Apparatur, welche das Verfestigen der Suspension auf und in dem Vlies durch Erwärmen ermöglicht, wie z.B. ein elektrisch beheizter Ofen durchläuft und die so hergestellte Membran auf einer zweiten Rolle aufgerollt wird. Auf diese Weise ist es möglich, die Membran im Durchlaufverfahren herzustellen.

Soll die erfindungsgemäße Membran als Separator eingesetzt werden und soll dieser eine Abschaltfunktion aufweisen, so können auf die poröse keramische Schicht Partikel als Abschaltpartikel aufgebracht und fixiert werden, die eine definierte, gewünschte Schmelztemperatur aufweisen.

In einer Ausführungsvariante des erfindungsgemäßen Verfahren hat es sich als vorteilhaft erwiesen, die poröse anorganische Schicht vor dem Aufbringen der Abschaltpartikel zu hydrophobieren. Die Herstellung hydrophober Membrane, die als Ausgangsmaterial für die Herstellung der erfindungsgemäßen Separatoren dienen können, wird beispielsweise in WO 99/62624 beschrieben. Vorzugsweise wird die poröse anorganische Schicht durch Behandlung mit Alkyl-, Aryl- oder Fluoralkylsilanen, wie sie z.B. unter dem Namen Markennamen Dynasilan von der Degussa vertrieben werden, hydrophobiert. Es können dabei z.B. die bekannten Methoden der Hydrophobierung, die unter anderem für Textilien angewendet werden (D. Knittel; E. Schollmeyer; Melliand Textilber. (1998) 79(5), 362-363), unter geringfügiger Änderung der Rezepturen, auch für poröse stoffdurchlässige Verbundwerkstoffe, welche z.B. nach dem in PCT/EP98/05939 beschriebenen Verfahren hergestellt wurden, angewendet werden. Zu diesem Zweck wird ein stoffdurchlässiger Verbundwerkstoff (Membran oder Separator) mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z.B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die poröse anorganische Schicht aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Schicht vor dem Aufbringen der Abschaltpartikel auch mit anderen Haftvermittlern behandelt werden. Die Behandlung mit einem der genannten Haftvermittler kann dann ebenfalls wie oben beschrieben erfolgen, d.h. dass die poröse anorganische Schicht mit einem polymeren Sol, welches ein Silan als Haftvermittler aufweist, behandelt wird. Insbesondere kann die Behandlung in der Weise erfolgen, dass bei der Herstellung des Separators wie oben beschrieben Haftvermittler eingesetzt werden.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z.B. Alkohol, Kohlenwasserstoffe, Ether oder Ketone oder einem Lösemittelgemisch, hergestellt. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße (D_{w}) größer der mittleren Porengröße der Poren der porösen anorganischen Schicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 d_{s,} besonders bevorzugt kleiner 2 dₛ beträgt.

Bevorzugt wird als Lösemittel für die Dispersion Wasser verwendet. Diese wässrige Dispersionen werden auf einen Polymer- bzw. Wachsgehalt von 1 bis 60, bevorzugt von 5 bis 50 und ganz besonders bevorzugt von 20 bis 40 Gew.-% eingestellt. Bei der Verwendung von Wasser als Lösemittel lassen sich sehr einfach bevorzugte mittlere Partikelgrößen von 1 bis 10 µm in der Dispersion erhalten, wie sie für die erfindungsgemäßen Separatoren sehr gut geeignet sind.

Wird ein nicht-wässriges Lösemittel zur Herstellung der Wachs- oder Polymerdispersion verwendet, so lassen sich bevorzugt mittlere Partikelgrößen in der Dispersion von kleiner 1 µm erhalten. Auch Mischungen von nicht-wässrigen Lösemitteln mit Wasser können eingesetzt werden.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Schicht eindringen. Gründe für den Einsatz solcher Partikel können z.B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Schicht erfolgt. Eine solch hohe Viskosität der Suspension kann z.B. dadurch erreicht werden, dass der Suspension Hilfsstoffe, die das Fließverhalten beeinflussen, wie z.B. Kieselsäuren (Aerosil, Degussa) hinzugefügt werden. Beim Einsatz von Hilfsstoffen wie z.B. Aerosil 200 ist häufig ein Anteil von 0,1 bis 10 Gew.-%, vorzugsweise 0,5 bis 50 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine Membran / einen Separator aufgebracht werden, auch wenn dieser nicht vor dem Aufbringen hydrophobiert wurde. Natürlich kann eine Haftvermittler aufweisende Suspension auch auf eine hydrophobierte Membran oder auf eine Membran, bei dessen Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Silane sind z.B. von der Degussa als reine Produkte oder als wässrige Lösungen des hydrolisierten Silans unter z.B. der Bezeichnung Dynasilan 2926, 2907 oder 2781 erhältlich. Ein Anteil von maximal 10 Gew.-% an Haftvermittler in der Suspension hat sich als ausreichend für die Sicherstellung einer genügend großen Haftung der Abschaltpartikel an der porösen anorganischen Beschichtung herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird. Die Trocknung muss so durchgeführt werden, dass die Abschaltpartikel nicht schmelzen.
Es kann vorteilhaft sein, wenn die Partikel nach dem Aufbringen auf die poröse keramische Beschichtung durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen, anorganischen Schicht haften.

Das Aufbringen der Suspension mit anschließendem Trocknen sowie ein eventuelles Erwärmen über die Glasübergangstemperatur kann kontinuierlich oder quasi kontinuierlich äquivalent zur Herstellung des Separators selbst erfolgen, in dem der Separator wiederum von einer Rolle abgewickelt, durch eine Beschichtungs-, Trocknungs- und gegebenenfalls Erwärmungsapparatur geführt und anschließend wieder aufgerollt werden.

Die erfindungsgemäßen Membrane bzw. die erfindungsgemäß hergestellten Membrane können als Filtrationsmembran, insbesondere in Flüssig-Filtrations-Anwendungen oder als elektrischer Separator eingesetzt werden, wobei die als Separator verwendeten Membrane keine elektrisch leitenden Verbindungen, insbesondere keine Titanverbindungen aufweisen dürfen. Die erfindungsgemäßen Membrane können insbesondere als Separator in Batterien, insbesondere als Separator in Lithiumbatterien, vorzugsweise Lithium-Hochleistungs- und Hochenergiebatterien eingesetzt werden. Solche Lithium-Batterien können als Elektrolyten Lithiumsalze mit großen Anionen in Carbonaten als Lösemittel auf. Geeignete Lithiumsalze sind z.B. LiClO₄, LiBF₄, LiAsF₆ oder LiPF₆, wobei LiPF₆ besonders bevorzugt ist. Als Lösemittel geeignete organische Carbonate sind z.B. Ethylencarbonat, Propylencarbonat, Dimethylcarbonat, Ethylmethylcarbonat oder Diethylcarbonat oder Mischungen davon.

Gegenstand der Erfindung sind außerdem Batterien, insbesondere Lithium-Batterien oder dazu verwandte, nichtwässrige Batteriesysteme, die eine erfindungsgemäße oder erfindungsgemäß hergestellten Membran aufweisen. Durch die gute Biegbarkeit der erfindungsgemäßen Membran können solche Batterien, insbesondere Lithiumbatterien, auch Wickelzellen mit einem Wickelradius der kleinsten Wicklung von kleiner 0,5 mm sein. Durch die erfindungsgemäße Membran ist es nun auch in sehr eng gewickelten Zellen, wie z.B. gecrashten Batterien, möglich, keramische bzw. halbkeramische Membrane als Separatoren einzusetzen, und so die mit diesen Separatoren verbundenen Vorteile nutzen zu können. Unter gecrashten Batterien werden üblicherweise Gewickelte Batterien (Wickelzellen) verstanden, die nach der Fertigung durch Einwirkung großer äußerer Kräfte in eine bestimmte, meist Ovale oder zumindest nicht runde Form gebracht werden.

Ebenfalls Gegenstand der vorliegenden Erfindung sind Filtrationsapparaturen, die eine erfindungsgemäße Membran aufweisen. Solche Apparaturen können z.B. Cross-Flow-Filtrations-Apparaturen sein.

Die vorliegende Erfindung wird durch die nachfolgenden Beispiele beschrieben, ohne dass der Schutzbereich, der sich aus den Ansprüchen und der Beschreibung ergibt, durch die Beispiele eingeschränkt sein soll.

### Beispiele

### Referenzbeispiel: Herstellung eines Keramikmembran nach dem Stand der Technik

Zu 130 g Wasser und 15 g Ethanol wurden zunächst 30 g einer 5 Gew.-%igen, wässrigen HNO₃-Lösung, 10 g Tetraethoxysilan, 2,5 g Methyltriethoxysilan und 7,5 g Dynasilan GLYMO gegeben. In diesem Sol, das zunächst für einige Stunden gerührt wurde, wurden dann jeweils 125 g der Aluminiumoxide Martoxid MZS-1 und Martoxid MZS-3 suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 56 cm breites Polyamid-Vlies (PA-Vlies, Freudenberg) mit einer Dicke von ca. 100 µm und einem Flächengewicht von etwa 30 g/m² wurde dann in einem kontinuierlichen Aufwalzverfahren, bei welchem auf das mit einer Bandgeschwindigkeit von ca. 30 m/h bewegte Vlies mittels einer Rakel der Schlicker aufgebracht wird und durch Durchlaufen eines Ofens mit einer Länge von 1 m und einer Temperatur von 150 °C mit obigem Schlicker beschichtet. Man erhielt am Ende eine Membran mit einer mittleren Porenweite von 450 nm, die eine sehr schlechte Haftung der Keramik auf dem Vlies aufwies. Nach 24h Einlagerung in Wasser (bei Raumtemperatur) hat sich praktisch die gesamte Keramik abgelöst.

### Beispiel 1: Herstellung einer erfindungsgemäßen Keramikmembran

Zu 130 g Wasser und 15 g Ethanol wurden zunächst 30 g einer 5 Gew.-%igen, wässrigen HNO₃-Lösung, 10 g Tetraethoxysilan, 10 g Dynasilan AMEO und 10 g Dynasilan GLYMO (alle Silane: Degussa AG) gegeben. In diesem Sol, das zunächst für einige Stunden gerührt wurde, wurden dann jeweils 125 g der Aluminiumoxide Martoxid MZS-1 und Martoxid MZS-3 (beide Oxide von Martinswerk) suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 56 cm breites PA-Vlies (Freudenberg) mit einer Dicke von ca. 100 µm und einem Flächengewicht von etwa 30 g/m² wurde dann in einem kontinuierlichen Aufwalzverfahren (Bandgeschwindigkeit ca. 30 m/h, T = 150 °C) mit obigem Schlicker, wie im Vergleichsversuch beschrieben, beschichtet. Man erhielt am Ende eine Membran mit einer mittleren Porenweite von 450 nm, die eine ausgesprochen gute Haftung der Keramik auf dem Vlies aufwies. Nach 24h Einlagerung in Wasser (bei Raumtemperatur) konnte keine Ablösung der Keramik festgestellt werden. Die Keramik hält selbst einer Behandlung mit Wasser bei 120°C in einem druckstabilen Reaktor stand, ist also dampfsterilisierbar. Der Bubble Point liegt nach der Dampfsterilisation bei 120°C unverändert bei etwa 1,7 bar, der Wasserfluss unverändert bei 58001/m²hbar.

Der Bubble Point (BP) ist der Druck in bar, bei dem eine Gasblase durch eine vollständig benetzte Membrane (Separator) tritt. Er ist ein Maß für die Größe der größten Pore bzw. Fehlstelle in einer Membrane. Je kleiner der BP desto größer ist die größte Pore bzw. der größte Fehler (Loch).

Zur Messung des Bubble Points wurde eine Membrane mit einer Größe von 30 mm Durchmesser zugeschnitten. Die zugeschnittene Membrane wurde in der Benetzungsflüssigkeit (VE-Wasser) wenigstens einen Tag lang gelagert. Die so vorbereitete Membrane wurde in einer Apparatur zwischen einer runden Sintermetallscheibe mit einem BP von ca. 0 bar (Messung ohne Membran), die als Stützmaterial dient, und einer Silikongummidichtung eingebaut, wobei die Apparatur oberhalb der Membran ein nach oben offenes Gefäß aufwies, welches den gleichen Querschnitt aufwies wie die Membran und mit 2 cm mit VE-Wasser gefüllt wurde, und unterhalb der Membran ein zweites Gefäß aufwies, welches ebenfalls den gleichen Querschnitt wie die Membran aufwies, und welches mit einem Lufteinlass ausgerüstet war, über welchen Pressluft über ein Druckminderventil in das Gefäß eingeleitet werden konnte. Die Membran wurde dabei unter der Sintermetallscheibe eingebaut, sodass die Sintermetallscheibe den Boden des oberen Gefäßes bildete und die Membrane das untere Gefäß abschloss. In 0,1 bar Schritten wurde anschließend der Druck im unteren Gefäß erhöht, wobei zwischen jeder Druckerhöhung eine halbe Minute liegt. Nach jeder Druckerhöhung wurde die Wasseroberfläche im oberen Gefäß für ca. eine halbe Minute beobachtet. Beim Auftreten der ersten kleinen Gasbläschen an der Wasseroberfläche ist der Druck des BP erreicht und die Messung wurde abgebrochen.

### Beispiel 2: Herstellung einer erfindungsgemäßen Keramikmembran

Zu 130 g Wasser und 15 g Ethanol wurden zunächst 30 g einer 5 Gew.-%igen, wässrigen HNO₃-Lösung, 10 g Tetraethoxysilan, 50 g Dynasilan MEMO (alle Silane: Degussa AG) gegeben. In diesem Sol, das zunächst für einige Stunden gerührt wurde, wurden dann jeweils 280 g des Aluminiumoxids CT1200SG (AlCoA) suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 56 cm breites PA-Vlies (Freudenberg) mit einer Dicke von ca. 100 µm und einem Flächengewicht von etwa 30 g/m² wurde dann mit einem Rakelauftragsgerät mit obigem Schlicker beschichtet. Die noch feuchte Membran wurde dann bei 80°C mittels Heißluft für 5 min. vorgetrocknet und die noch leicht feuchte Membran dann für 1h mit einer Quecksilberdampflampe bei einer Wellenlänge von 254 nm behandelt. Anschließend wurde die Membran nochmals bei 210°C für 30 min nachverfestigt. Man erhielt am Ende eine Membran mit einer mittleren Porenweite von 240 nm, die eine ausgesprochen gute Haftung der Keramik auf dem Vlies aufwies. Nach 24h Einlagerung in Wasser (bei Raumtemperatur) konnte keine Ablösung der Keramik festgestellt werden. Die Keramik hielt selbst einer Behandlung mit Wasser bei 120°C in einem druckstabilen Reaktor stand, ist also dampfsterilisierbar. Der Bubble Point lag nach der Dampfsterilisation bei 120°C unverändert bei etwa 3,5 bar, der Wasserfluss unverändert bei 2100 l/m²hbar.

## Patentansprüche

1. Membran auf Basis eines Polymervlieses, wobei das Vlies auf und in dem Vlies eine keramische Beschichtung aufweist, die zumindest ein Oxid, ausgewählt aus Al₂O₃, TiO₂, zrO₂ oder SiO₂ aufweist,
**dadurch gekennzeichnet,**
**dass** in dieser einen Beschichtung zumindest zwei Fraktionen von Oxiden ausgewählt aus Al₂O₃, ZrO₂, TiO₂ und/oder SiO₂ vorhanden sind, wobei die erste keramische Fraktion aus einem Sol erhältlich ist und die zweite Fraktion Partikel mit einer mittleren Partikelgröße von 200 nm bis 5 µm aufweist, und die erste Fraktion als Schicht auf den Partikeln der zweiten Fraktion vorhanden ist und die erste Fraktion mit einem Anteil an der Beschichtung von 1 bis 30 Massenteilen, die zweite Fraktion mit einem Anteil an der Beschichtung von 5 bis 94 Massenteilen in der keramischen Beschichtung vorhanden ist und außerdem ein Silizium aufweisendes Netzwerk vorhanden ist, wobei das Silizium des Netzwerks über Sauerstoffatome an die Oxide der keramischen Beschichtung, über organische Reste an das Polymervlies und über zumindest eine, Kohlenstoffatome aufweisende Kette an ein weiteres Silizium gebunden ist.

2. Membran nach Anspruch 1,
**dadurch gekennzeichnet,**
**dass** sie durch ein Verfahren gemäß zumindest einem der Ansprüche 14 bis 26 erhältlich ist.

3. Membran gemäß Anspruch 1 oder 2,
**dadurch gekennzeichnet,**
**dass** die erste keramische Fraktion Partikel mit einer mittleren Partikelgröße von kleiner 20 nm aufweist und über ein partikuläres Sol herstellbar ist.

4. Membran gemäß Anspruch 1 oder 2,
**dadurch gekennzeichnet,**
**dass** die erste keramische Fraktion Partikel oder ein anorganisches Netzwerk des keramischen Materials enthält, die über ein polymeres Sol herstellbar ist.

5. Membran gemäß zumindest einem der Anspruch 1 bis 4,
**dadurch gekennzeichnet,**
**dass** die erste keramische Fraktion auf den Partikel der zweiten Fraktion eine Schichtdicke kleiner 100 nm aufweist

6. Membran nach zumindest einem der Anspruch 1 bis 5,
**dadurch gekennzeichnet,**
**dass** die zweite Partikelfraktion Partikel enthält, die eine BET-Oberfläche von kleiner 5 m²/g aufweisen.

7. Membran nach zumindest einem der Ansprüche 1 bis 6,
**dadurch gekennzeichnet,**
**dass** das Polymervlies Polymerfasern, die ausgewählt sind aus Fasern von Polyethylen, Polyacrylnitril, Polypropylen, Polyamid und/oder Polyester, aufweist.

8. Membran gemäß zumindest einem der Ansprüche 1 bis 7,
**dadurch gekennzeichnet,**
**dass** in der Beschichtung zumindest drei Fraktionen von Oxiden ausgewählt aus Al₂O₃, ZrO₂, TiO₂ und/oder SiO₂ vorhanden sind, wobei die dritte Fraktion Partikel mit einer mittleren Primärpartikelgröße von 10 nm bis 199 nm aufweist und die erste Fraktion als Schicht auf den Partikeln der zweiten und dritten Fraktion vorhanden ist und die erste Fraktion mit einem Anteil an der Beschichtung von 1 bis 30 Massenteilen, die zweite Fraktion mit einem Anteil an der Beschichtung von 30 bis 94 Massenteilen und die dritte Fraktion mit einem Anteil an der Beschichtung von 5 bis 50 Massenteilen in der keramischen Beschichtung vorhanden ist.

9. Membran gemäß Anspruch 8,
**dadurch gekennzeichnet,**
**dass** die dritte Partikelfraktion Partikel enthält, die eine BET-Oberfläche von 10 bis 1000 m²/g aufweisen.

10. Membran gemäß Anspruch 8 oder 9,
**dadurch gekennzeichnet,**
**dass** die dritte Partikelfraktion Partikel enthält, die eine mittlere Aggregat- oder Agglomeratgröße von 1 bis 25 µm aufweisen.

11. Membran gemäß zumindest einem der Ansprüche 8 bis 10,
**dadurch gekennzeichnet**,
wobei die zweite Fraktion Partikel mit einer mittleren Primärpartikelgröße von 30 nm bis 60 nm aufweist und die dritte Fraktion Partikel mit einer mittleren Partikelgröße von 1 bis 4 µm aufweist und die erste Fraktion mit einem Anteil an der Beschichtung von 10 bis 20 Massenteilen, die zweite Fraktion mit einem Anteil an der Beschichtung von 10 bis 30 Massenteilen und die dritte Fraktion mit einem Anteil an der Beschichtung von 40 bis 70 Massenteilen in der keramischen Beschichtung vorhanden ist.

12. Membran gemäß zumindest einem der Ansprüche 8 bis 11,
**dadurch gekennzeichnet,**
**dass** die Partikel der dritten Fraktion Zirkoniumoxid oder bevorzugt Siliziumoxidpartikel und die Partikel der zweiten Fraktion Aluminiumoxidpartikel sind und die erste keramische Fraktion aus Siliziumoxid gebildet wird.

13. Membran gemäß zumindest einem der Ansprüche 1 bis 12,
**dadurch gekennzeichnet,**
**dass** sie bis herab zu einem Radius von 5 mm, gebogen werden kann, ohne dass **dadurch** Fehler entstehen.

14. Verfahren zur Herstellung einer Membran, gemäß zumindest einem der Ansprüche 1-13 bei dem ein Polymervlies in und auf dem Vlies mit einer keramischen Beschichtung versehen wird, wofür auf und in das Polymervlies eine Suspension aufgebracht wird und diese durch zumindest einmaliges Erwärmen auf und im Vlies verfestigt wird, wobei die Suspension ein Sol und zumindest eine Fraktion von Oxidpartikeln ausgewählt aus den Oxiden der Elemente Al, Zr, Ti und/oder Si aufweist,
**dadurch gekennzeichnet,**
**dass** der Suspension vor dem Aufbringen ein Gemisch aus zumindest zwei unterschiedlichen Haftvermittlern, die jeweils auf einem Alkylalkoxysilan der allgemeinen Formel I
Rₓ-Si(OR)₄₋ₓ (I)
mit x = 1 oder 2 und R = organischer Rest, wobei die Reste R gleich oder unterschiedlich sein können,
basieren, wobei die Haftvermittler so gewählt werden, dass beide Haftvermittler Alkylreste aufweisen, die zumindest jeweils eine reaktive Gruppe als Substituenten aufweisen, wobei die reaktive Gruppe am Alkylrest des einen Haftvermittlers mit der reaktiven Gruppe des anderen Haftvermittlers während des zumindest einmaligen Erwärmens unter Ausbildung einer kovalenten Bindung reagiert, oder ein oder mehrere Haftvermittler gemäß der Formel I, die reaktive Gruppen aufweisen, die unter Einwirkung von UV-Strahlung unter Ausbildung einer kovalenten Bindung reagieren, zugegeben wird, wobei bei Zugabe eines Haftvermittlers der unter Einwirkung von UV-Strahlung reagiert, nach dem Aufbringen der Suspension auf das Polymervlies zumindest eine Behandlung mit UV-Strahlung erfolgt.

15. Verfahren nach Anspruch 14,
**dadurch gekennzeichnet,**
**dass** ein Polymervlies eingesetzt wird, das Fasern ausgewählt aus Polyester, Polyethylen, Polypropylen und/oder Polyamid, aufweist.

16. Verfahren nach Anspruch 14 oder 15,
**dadurch gekennzeichnet,**
**dass** die Suspension zumindest ein Sol einer Verbindung der Elemente Al, Si, Ti oder Zr aufweist und durch Suspendieren der Fraktion von Oxidpartikeln in zumindest einem dieser Sole hergestellt wird.

17. Verfahren nach zumindest einem der Ansprüche 14 bis 16,
**dadurch gekennzeichnet,**
**dass** die Suspension ein polymeres Sol einer Verbindung des Siliziums aufweist.

18. Verfahren nach zumindest einem der Ansprüche 14 bis 17,
**dadurch gekennzeichnet,**
**dass** die Sole durch Hydrolysieren einer Vorläuferverbindung der Elemente Al, Zr, Ti oder Si mit Wasser oder einer Säure oder einer Kombination dieser Verbindungen erhalten werden.

19. Verfahren nach zumindest einem der Ansprüche 14 bis 18,
**dadurch gekennzeichnet,**
**dass** der Massenanteil der suspendierten Partikelfraktionen dem 1,5 bis 150-fachen der eingesetzten ersten Fraktion aus dem Sol entspricht.

20. Verfahren nach zumindest einem der Ansprüche 14 bis 19,
**dadurch gekennzeichnet,**
**dass** als bei Erwärmung eine kovalente Bindung ausbildende Haftvermittler 3-Aminopropyltriethoxysilan (AMEO) und 3-Glycidyloxytrimethoxysilan (GLYMO) eingesetzt werden.

21. Verfahren nach zumindest einem der Ansprüche 14 bis 19,
**dadurch gekennzeichnet,**
**dass** als unter Einwirkung von UV-Strahlung eine kovalente Bindung ausbildender Haftvermittler Methacryloxypropyltrimethoxysilan (MEMO) eingesetzt wird.

22. Verfahren nach Anspruch 21,
**dadurch gekennzeichnet,**
**dass** die Behandlung mit UV-Strahlung vor oder nach dem zumindest einmaligen Erwärmen erfolgt.

23. Verfahren nach zumindest einem der Ansprüche 14 bis 22,
**dadurch gekennzeichnet,**
**dass** die auf und im Polymervlies vorhandene Suspension durch Erwärmen auf 50 bis 350 °C verfestigt wird.

24. Verfahren nach Anspruch 23,
**dadurch gekennzeichnet,**
**dass** das Erwärmen der Suspension auf einem Polymervlies mit Fasern aus Polyester für 0,5 bis 10 Minuten bei einer Temperatur von 200 bis 220 °C erfolgt.

25. Verfahren nach Anspruch 23,
**dadurch gekennzeichnet,**
**dass** das Erwärmen der Suspension auf einem Polymervlies mit Fasern aus Polyamid für 0,5 bis 10 Minuten bei einer Temperatur von 130 bis 180 °C erfolgt.

26. Verfahren nach einem der Ansprüche 14 bis 25,
**dadurch gekennzeichnet,**
**dass** eine Suspension eingesetzt wird, die zumindest ein Sol und zumindest zwei Fraktionen von Oxidpartikeln ausgewählt aus den Oxiden der Elemente Al, Zr, Ti und/oder Si aufweist und zumindest eine Fraktion eine mittlere Primärpartikelgröße von 10 nm bis 199 nm und einem Anteil an der Suspension von 5 bis 50 Massenteilen und zumindest eine Fraktion Primärpartikel mit einer mittleren Partikelgröße von 200 nm bis 5 µm und einem Anteil an der Suspension von 30 bis 94 Massenteilen aufweist.

27. Verwendung einer Membran gemäß zumindest einem der Ansprüche 1 bis 13 als Filtrationsmembran oder als elektrischer Separator, wobei die als Separator verwendeten Membranen keine Titanverbindungen aufweisen.

28. Lithiumbatterie, eine Membran gemäß zumindest einem der Ansprüche 1 bis 13 als Separator aufweisend.

29. Filtrationsapparatur, eine Membran gemäß zumindest einem der Ansprüche 1 bis 13 aufweisend.

## Claims

1. Membrane based on a polymeric nonwoven, said nonwoven comprising on and in said nonwoven a ceramic coating which comprises at least one oxide selected from Al₂O₃, TiO₂, ZrO₂ or SiO₂,
**characterized in that**
this one coating comprises at least two fractions of oxides selected from Al₂O₃, ZrO₂, TiO₂ and/or SiO₂, the first ceramic fraction being obtainable from a sol and the second fraction comprising particles having an average particle size in the range from 200 nm to 5 µm and the first fraction being present as a layer on the particles of said second fraction and said first fraction comprising from 1 to 30 parts by mass of said coating, said second fraction comprising from 5 to 94 parts by mass of the ceramic coating and also a silicon network, the silicon of said network being bonded via oxygen atoms to said oxides of said ceramic coating, via organic radicals to said polymeric nonwoven and via at least one carbon chain to a further silicon.

2. Membrane according to Claim 1,
**characterized in that**
it can be obtained by a process according to at least one of Claims 14 to 26.

3. Membrane according to Claim 1 or 2,
**characterized in that**
said first ceramic fraction comprises particles having an average particle size of less than 20 nm and is obtainable via a particulate sol.

4. Membrane according to Claim 1 or 2,
**characterized in that**
said first ceramic fraction contains particles or an inorganic network of the ceramic material which is obtainable via a polymeric sol.

5. Membrane according to at least one of Claims 1 to 4,
**characterized in that**
said first ceramic fraction has a layer thickness of less than 100 nm on said particles of said second fraction.

6. Membrane according to at least one of Claims 1 to 5,
**characterized in that**
said second particle fraction contains particles having a BET surface area of less than 5 m²/g.

7. Membrane according to at least one of Claims 1 to 6,
**characterized in that**
said polymeric nonwoven comprises polymeric fibers selected from fibers of polyethylene, polyacrylonitrile, polypropylene, polyamide and/or polyester.

8. Membrane according to at least one of Claims 1 to 7,
**characterized in that**
said coating comprises at least three fractions of oxides selected from Al₂O₃, ZrO₂, TiO₂ and/or SiO₂, the third fraction comprising particles having an average primary particle size in the range from 10 nm to 199 nm and said first fraction being present as a layer on said particles of said second and third fractions and said first fraction comprising from 1 to 30 parts by mass of said ceramic coating, said second fraction comprising from 30 to 94 parts by mass of said ceramic coating and said third fraction comprising from 5 to 50 parts by mass of said ceramic coating.

9. Membrane according to Claim 8,
**characterized in that**
said third particle fraction contains particles having a BET surface area in the range from 10 to 1 000 m²/g.

10. Membrane according to Claim 8 or 9,
**characterized in that**
said third particle fraction contains particles having an average aggregate or agglomerate size in the range from 1 to 25 µm.

11. Membrane according to at least one of Claims 8 to 10,
**characterized in that**
said second fraction comprises particles having an average primary particle size in the range from 30 nm to 60 nm and said third fraction comprises particles having an average particle size in the range from 1 to 4 µm and said first fraction comprises from 10 to 20 parts by mass of said ceramic coating, said second fraction comprises from 10 to 30 parts by mass of said ceramic coating and said third fraction comprises from 40 to 70 parts by mass of said ceramic coating.

12. Membrane according to at least one of Claims 8 to 11,
**characterized in that**
said particles of said third fraction are zirconium oxide or preferably silicon oxide particles and said particles of said second fraction are aluminum oxide particles and said first ceramic fraction is formed from silicon oxide.

13. Membrane according to at least one of Claims 1 to 12,
**characterized in that**
it is bendable down to a radius of 5 mm without defects arising as a result.

14. Process for producing a membrane according to at least one of Claims 1 to 13, which process comprises providing a polymeric nonwoven with a ceramic coating in and on said nonwoven by a suspension being applied onto and into said polymeric nonwoven and being solidified on and in said nonwoven by heating one or more times, said suspension comprising a sol and at least one fraction of oxidic particles selected from the oxides of the elements Al, Zr, Ti and/or Si, **characterized in that** said suspension has added to it prior to application a mixture of at least two different adhesion promoters which are each based on an alkylalkoxysilane of the general formula I
Rₓ-Si(OR)₄₋ₓ (I)
where x = 1 or 2 and R = organic radical, the R radicals being the same or different,
said adhesion promoters being selected so that both the adhesion promoters comprise alkyl radicals which at least each comprise a reactive group as a substituent, said reactive group on said alkyl radical of one adhesion promoter reacting with said reactive group of the other adhesion promoter during the one or more heating steps to form a covalent bond, or one or more adhesion promoters as per the formula I, which have reactive groups which are capable of reacting under the action of UV radiation to form a covalent bond, the addition of an adhesion promoter which reacts under the action of UV radiation being followed by one or more treatments with UV radiation after said suspension has been applied to said polymeric nonwoven.

15. Process according to Claim 14,
**characterized in that**
the fibers of said polymeric nonwoven used are selected from polyester, polyethylene, polypropylene and/or polyamide.

16. Process according to Claim 14 or 15,
**characterized in that**
said suspension comprises at least one sol of a compound of the elements Al, Si, Ti or Zr and is prepared by suspending said fraction of oxidic particles in at least one of these sols.

17. Process according to at least one of Claims 14 to 16,
**characterized in that**
said suspension comprises a polymeric sol of a compound of said silicon.

18. Process according to at least one of Claims 14 to 17,
**characterized in that**
said sols are obtained by hydrolyzing a precursor compound of the elements Al, Zr, Ti or Si with water or an acid or a combination thereof.

19. Process according to at least one of Claims 14 to 18,
**characterized in that**
the mass fraction of the suspended particle fractions is from 1.5 to 150 times the employed first fraction from said sol.

20. Process according to at least one of Claims 14 to 19,
**characterized in that**
3-aminopropyltriethoxysilane (AMEO) and 3-glycidyloxytrimethoxysilane (GLYMO) are used as adhesion promoters capable of forming a covalent bond on heating.

21. Process according to at least one of Claims 14 to 19,
**characterized in that**
methacryloyloxypropyltrimethoxysilane (MEMO) is used as an adhesion promoter capable of forming a covalent bond under the action of UV radiation.

22. Process according to Claim 21,
**characterized in that**
the treatment with UV radiation is effected before or after said at least single heating.

23. Process according to at least one of Claims 14 to 22,
**characterized in that**
said suspension present on and in said polymeric nonwoven is solidified by heating to a temperature in the range from 50 to 350°C.

24. Process according to Claim 23,
**characterized in that**
on a polymeric nonwoven comprising polyester fibers said suspension is heated at a temperature in the range from 200 to 220°C for from 0.5 to 10 minutes.

25. Process according to Claim 23,
**characterized in that**
on a polymeric nonwoven comprising polyamide fibers said suspension is heated at a temperature in the range from 130 to 180°C for from 0.5 to 10 minutes.

26. Process according to any one of Claims 14 to 25,
**characterized in that**
said suspension comprises at least one sol and at least two fractions of oxidic particles selected from the oxides of the elements Al, Zr, Ti and/or Si and at least one fraction has an average primary particle size in the range from 10 nm to 199 nm and comprises from 5 to 50 parts by mass of said suspension and at least one fraction comprises primary particles having an average particle size in the range from 200 nm to 5 µm and comprises from 30 to 94 parts by mass of said suspension.

27. Use of a membrane according to at least one of Claims 1 to 13 as a filtration membrane or as an electrical separator, although when used as a separator the membranes are free of any titanium compounds.

28. Lithium battery comprising a membrane according to at least one of Claims 1 to 13 as a separator.

29. Filtration apparatus comprising a membrane according to at least one of Claims 1 to 13.

## Revendications

1. Membrane à base d'un voile polymère, le voile présentant sur et dans le voile, un revêtement céramique, qui présente au moins un oxyde, choisi parmi Al₂O₃, TiO₂, ZrO₂ ou SiO₂,
**caractérisée en ce que**
dans ce revêtement, au moins deux fractions d'oxydes, choisis parmi Al₂O₃, ZrO₂, TiO₂ et/ou SiO₂, sont présentes, la première fraction céramique pouvant être obtenue à partir d'un sol et la deuxième fraction présentant des particules avec une granulométrie moyenne allant de 200 nm à 5 *µ*m, la première fraction étant présente sous forme d'une couche sur les particules de la deuxième fraction et la première fraction étant présente dans le revêtement céramique dans une proportion du revêtement allant de 1 à 30 parties en masse et la deuxième fraction dans une proportion du revêtement allant de 5 à 94 parties en masse et, de plus, un réseau présentant du silicium étant présent, le silicium du réseau étant lié par un atome d'oxygène à l'oxyde du revêtement céramique, par des radicaux organiques sur le voile polymère et par au moins une chaîne présentant des atomes de carbone, sur un autre silicium.

2. Membrane selon la revendication 1,
**caractérisée en ce**
**qu'**elle peut être obtenue par un procédé selon au moins une des revendications 14 à 26.

3. Membrane selon la revendication 1 ou 2,
**caractérisée en ce que**
la première fraction céramique présente des particules avec une granulométrie moyenne inférieure à 20 nm et peut être préparée par un sol particulaire.

4. Membrane selon la revendication 1 ou 2,
**caractérisée en ce que**
la première fraction céramique contient des particules ou un réseau inorganique du matériau céramique, qui peuvent être préparés par un sol polymère.

5. Membrane selon au moins une des revendications 1 à 4,
**caractérisée en ce que**
la première fraction céramique présente sur les particules de la deuxième fraction une épaisseur de couche inférieure à 100 nm.

6. Membrane selon au moins une des revendications 1 à 5,
**caractérisée en ce que**
la deuxième fraction de particules contient des particules, qui présentent une surface BET inférieure à 5 m²/g.

7. Membrane selon au moins une des revendications 1 à 6,
**caractérisée en ce que**
le voile polymère présente des fibres polymères, qui sont choisies parmi les fibres en polyéthylène, polyacrylonitrile, polypropylène, polyamide et/ou polyester.

8. Membrane selon au moins une des revendications 1 à 7,
**caractérisée en ce que**
dans le revêtement, au moins trois fractions d'oxydes, choisis parmi Al₂O₃, ZrO₂, TiO₂ et/ou SiO₂, sont présentes, la troisième fraction présentant des particules avec une granulométrie primaire moyenne allant de 10 nm à 199 nm et la première fraction étant présente sous la forme d'une couche sur les particules des deuxième et troisième fractions, la première fraction étant présente dans le revêtement céramique dans une proportion du revêtement allant de 1 à 30 parties en masse, la deuxième fraction dans une proportion du revêtement allant de 30 à 94 parties en masse et la troisième fraction dans une proportion du revêtement allant de 5 à 50 parties en masse.

9. Membrane selon la revendication 8,
**caractérisée en ce que**
la troisième fraction de particules contient des particules, qui présentent une surface BET allant de 10 à 1000 m²/g.

10. Membrane selon la revendication 8 ou 9,
**caractérisée en ce que**
la troisième fraction de particules contient des particules, qui présentent une taille moyenne d'agrégat ou d'agglomérat allant de 1 à 25 µm.

11. Membrane selon au moins une des revendications 8 à 10,
**caractérisée en ce que**
la deuxième fraction présente des particules avec une granulométrie primaire moyenne allant de 30 nm à 60 nm et la troisième fraction présente des particules avec une granulométrie moyenne allant de 1 à 4 µm, la première fraction étant présente dans le revêtement céramique dans une proportion du revêtement allant de 10 à 20 parties en masse, la deuxième fraction dans une proportion du revêtement allant de 10 à 30 parties en masse et la troisième fraction dans une proportion du revêtement allant de 40 à 70 parties en masse.

12. Membrane selon au moins une des revendications 8 à 11,
**caractérisée en ce que**
les particules de la troisième fraction sont des particules d'oxyde de zirconium ou, de préférence, d'oxyde de silicium et les particules de la deuxième fraction sont des particules d'oxyde d'aluminium et la première fraction céramique est formée d'oxyde de silicium.

13. Membrane selon au moins une des revendications 1 à 12,
**caractérisée en ce**
**qu'**elle peut être fléchie jusqu'à un rayon de 5 mm, sans qu'il se forme ainsi des altérations.

14. Procédé de préparation d'une membrane selon au moins une des revendications 1 à 13, dans lequel un voile polymère est muni dans et sur le voile d'un revêtement céramique, par application sur et dans le voile polymère d'une suspension, qui est durcie sur et dans le voile par au moins un chauffage, la suspension présentant un sol et au moins une fraction de particules d'oxyde choisi parmi les oxydes des éléments Al, Zr, Ti et/ou Si,
**caractérisé en ce que**
l'on ajoute à la suspension, avant application, un mélange d'au moins deux auxiliaires d'adhérence différents, qui sont basés à chaque fois, sur un alkylalcoxysilane de formule générale I
Rₓ-Si(OR)₄₋ₓ (I)
avec x = 1 ou 2 et R = un radical organique, les radicaux R pouvant être identiques ou différents,
les auxiliaires d'adhérence étant choisis de sorte que les deux auxiliaires d'adhérence présentent des radicaux alkyle, qui présentent au moins à chaque fois un groupe réactif comme substituant, le groupe réactif sur le radical alkyle d'un des auxiliaires d'adhérence réagissant avec le groupe réactif de l'autre auxiliaire d'adhérence pendant ledit au moins un chauffage avec formation d'une liaison covalente, ou un ou plusieurs auxiliaires d'adhérence selon la formule I, qui présentent des groupes réactifs, qui réagissent par action d'un rayonnement UV avec formation d'une liaison covalente, procédé dans lequel, lors de l'addition d'un auxiliaire d'adhérence qui réagit par action d'un rayonnement UV, on réalise au moins un traitement par un rayonnement UV après l'application sur le voile polymère.

15. Procédé selon la revendication 14,
**caractérisé en ce**
**qu'**un voile polymère est mis en oeuvre, lequel présente des fibres choisies parmi le polyester, le polyéthylène, le polypropylène et/ou le polyamide.

16. Procédé selon la revendication 14 ou 15,
**caractérisé en ce que**
la suspension présente au moins un sol d'un composé des éléments Al, Si, Ti ou Zr et est préparée par mise en suspension de la fraction des particules d'oxyde dans au moins un de ces sols.

17. Procédé selon au moins une des revendications 14 à 16,
**caractérisé en ce que**
la suspension présente un sol polymère d'un composé du silicium.

18. Procédé selon au moins une des revendications 14 à 17,
**caractérisé en ce que**
les sols sont obtenus par hydrolyse d'un composé précurseur des éléments Al, Zr, Ti ou Si avec de l'eau ou un acide ou une combinaison de ces composés.

19. Procédé selon au moins une des revendications 14 à 18,
**caractérisé en ce que**
la proportion massique des fractions de particules en suspension correspond à 1,5 à 150 fois la première fraction mise en oeuvre à partir du sol.

20. Procédé selon au moins une des revendications 14 à 19,
**caractérisé en ce que**
comme auxiliaire d'adhérence formant une liaison covalente par chauffage, on met en oeuvre le 3-aminopropyltriéthoxysilane (AMEO) et le 3-glycidyloxytriméthoxysilane (GLYMO).

21. Procédé selon au moins une des revendications 14 à 19,
**caractérisé en ce que**
comme auxiliaire d'adhérence formant une liaison covalente par action d'un rayonnement UV, on met en oeuvre le méthacryloxypropyltriméthoxysilane (MEMO).

22. Procédé selon la revendication 21,
**caractérisé en ce que**
le traitement par le rayonnement UV est réalisé avant ou après ledit au moins un chauffage.

23. Procédé selon au moins une des revendications 14 à 22,
**caractérisé en ce que**
la suspension présente sur et dans le voile polymère est durcie par chauffage à 50 à 350°C.

24. Procédé selon la revendication 23,
**caractérisé en ce que**
le chauffage de la suspension est réalisé sur un voile polymère avec des fibres en polyester, pendant 0,5 à 10 minutes à une température allant de 200 à 220°C.

25. Procédé selon la revendication 23,
**caractérisé en ce que**
le chauffage de la suspension est réalisé sur un voile polymère avec des fibres en polyamide, pendant 0,5 à 10 minutes à une température allant de 130 à 180°C.

26. Procédé selon au moins une des revendications 14 à 25,
**caractérisé en ce**
**qu'**une suspension est mise en oeuvre, laquelle présente au moins un sol et au moins deux fractions de particules d'oxyde, choisi parmi les oxydes des éléments Al, Zr, Ti et/ou Si, au moins une fraction présentant une granulométrie primaire moyenne allant de 10 nm à 199 nm et une proportion dans la suspension allant de 5 à 50 parties en masse et au moins une fraction présentant une granulométrie primaire allant de 200 nm à 5 µm et une proportion dans la suspension allant de 30 à 94 parties en masse.

27. Utilisation d'une membrane selon au moins une des revendications 1 à 13 comme membrane de filtration ou comme séparateur électrique, les membranes utilisées comme séparateur ne présentant pas de composés du titane.

28. Batterie au lithium présentant une membrane selon au moins une des revendications 1 à 13 comme séparateur.

29. Appareil de filtration présentant une membrane selon au moins une des revendications 1 à 13.
